# EUROPEAN PATENT APPLICATION

(11) **EP 1 099 369 A1**
(43) Date of publication of application: **16.05.2001**
(21) Application number: 00203948.5
(22) Date of filing: 09.11.2000
(51) Int. Cl.: A01G 17/14

(54) **Vine pole**

(30) Priority: 10.11.1999 NL 1013540
(71) Applicant: Lankhorst Recycling B.V., 8607 AD Sneek (NL)
(72) Inventor: Flohr, Ernst Eduard Laurentius Antonius, 8601 AH Sneek (NL)
(74) Representative: Prins, Adrianus Willem

(57) **Abstract**

A vine pole for supporting wires for guiding vines, provided with spaced gripping means (10-60, 110-160) for wires, having an elongated plastic section with at least two flanges (3, 5, 103, 104, 203, 204) extending from a central part of the section, the gripping means (10-60, 110-160) being located in an edge portion of at least one of the flanges (3, 5, 103, 104, 203, 204) and being formed integrally with the at least one flange (3, 5, 103, 104, 203, 204).

## Description

The invention relates to a vine pole for supporting wires for guiding vines, provided with spaced gripping means for wires. Such vine poles are used in the cultivation of vines. The vine poles are introduced into the soil between the vines and then support wires stretched along the vines to support the developing vine shoots.

Conventionally, these vine poles are made of round wooden poles, which are provided with two opposite rows of nails for supporting and passing through the wires. Other embodiments are made of galvanized sections with guiding means for supporting the wires.

Disadvantageous to these known vine poles is that the part of the poles located in the soil is corroded by the soil and the groundwater, the soil being polluted by the substances released during the corrosion of the poles, such as, for instance, rust, dissolved wood impregnating agents and the like. This soil pollution is particularly disadvantageous to the cultivation of vines, because the quality of the grapes and the wine made therefrom largely depends on the quality of the soil.

Besides, the known poles are relatively expensive and heavy, and the durability is limited.

It is the object of the invention to provide a solution to these disadvantages. To this end, a vine pole of the above-indicated type is characterized according to the invention by an elongated plastic section with at least two flanges extending from a central part of the section, the gripping means being located in an edge portion of at least one of the flanges.

According to the invention this ensures a light and strong vine pole which is not corroded in the soil and therefore does not cause pollution of the soil. Also, the vine pole according to the invention is durable and can be manufactured at low cost. By forming the gripping means integrally from the flanges, the manufacture of the vine pole is further simplified. By designing the gripping means such that they are located completely within the contour of the flange, it is ensured that the gripping means are practically insensitive to damage, in particular during transport and storage.

The invention will be explained in more detail on the basis of an extensive description of a number of exemplary embodiments of the invention with reference to the drawings, in which
Fig. 1 is a perspective view of a vine pole according to the invention,
Fig. 2 is a front view of a part of the vine pole of Fig. 1,
Fig. 3 is a side view of a part of the vine pole of Fig. 1,
Fig. 4 is a perspective view of another vine pole according to the invention,
Fig. 5 is a perspective view of yet another vine pole according to the invention, and
Fig. 6 is an example for application according to the invention.

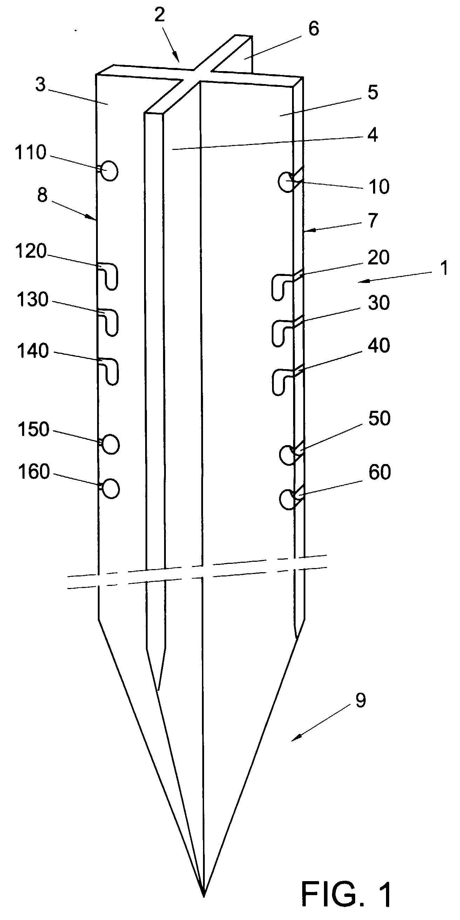

An example of a vine pole according to the invention is shown in Fig. 1. The vine pole 1 is formed by an elongated section made of plastic. Preferably, this plastic consists completely or partly of recycled plastic. From a central part 2 of the section four flanges 3, 4, 5, 6 extend, which flanges always enclose an angle of 90° to each other. As a result, the cross-section of the vine pole 1 perpendicular to the longitudinal axis of the vine pole 1 is cross-shaped. In this example the flanges 3-6 extend from the central part 2 equally far.

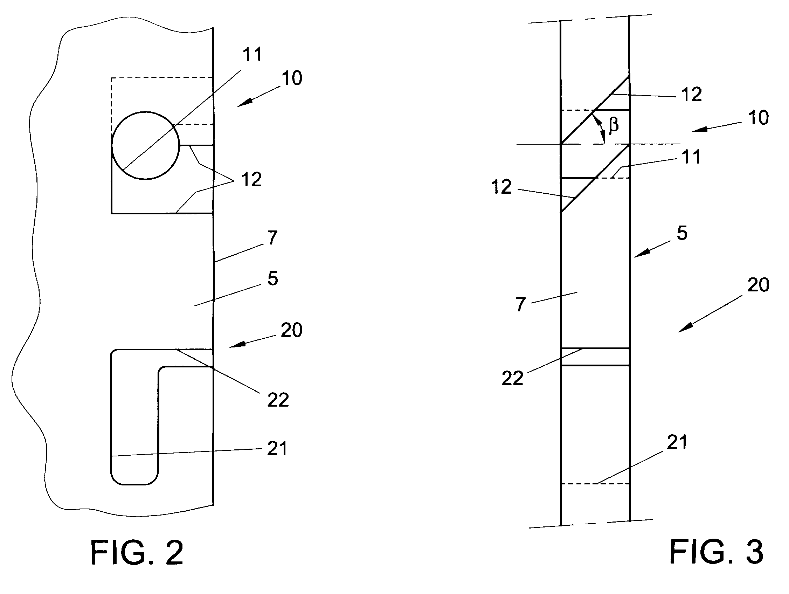

In Figs. 2 and 3 an upper part of the flange 5 is shown in detail. Near the outer edge 7 of the flange 5 a passage eye 10 is located, at a short distance from the upper end of the pole 1. The passage eye 10 is formed by a through hole 11 provided near the edge 7 in the flange 5, which hole extends throughout the thickness of the flange 5. The hole 11 is in open communication with the edge 7 via a slot 12 directed at an angle β to a transverse plane through the pole 1. In operation, a wire can be introduced into the hole 11 by first swinging the wire and passing it through the slot 12 and then causing the wire to swing back freely. In the horizontal operative condition, the wire is enclosed completely by the hole 11, and the wire cannot leave the hole 11 through movements caused by wind.

Near the outer edge 7 of the flange 5 a fixing opening 20 is located, at some distance below the passage eye 10. The fixing opening 20 is formed by a vertically elongated hole 21 provided near the edge 7 in the flange 5, which hole extends throughout the thickness of the flange 5. At the upper end the hole 21 is in open communication with the edge 7 via a slot 22 located in a transverse plane through the pole 1. Through the slot 22 a wire can be passed, which then comes to rest in the lower part of the hole 21. As a result, the wire is properly enclosed in the hole 21 but can also be simply removed from the hole 21 via the slot 22.

Below the fixing opening 20 a second fixing opening 30 is located, and below the latter a third fixing opening 40. The fixing openings 30, 40 are designed identically to the fixing opening 20.

Below the fixing openings 20-40 a second passage eye 50 is located, and below the latter a third passage eye 60. The passage eyes 50, 60 are designed identically to the passage eye 10.

The edge 8 of the flange 3 is provided in a manner corresponding to flange 5 with gripping means in the form of fixing openings 120, 130, 140 and passage eyes 110, 150, 160. The fixing openings 120, 130, 140 are designed correspondingly to the fixing openings 20, 30, 40. The passage eyes 110, 150, 160 are designed correspondingly to the passage eyes 10, 50, 60.

The lower part of the vine pole 1 is provided with a point 9 having an apex angle of 30°. Through this sharp point the vine pole 1 can be simply introduced into the soil.

In this exemplary embodiment the length of the vine pole 1 is approximately 140 cm, of which the lower 40 cm, in the operative condition, are introduced into the soil.

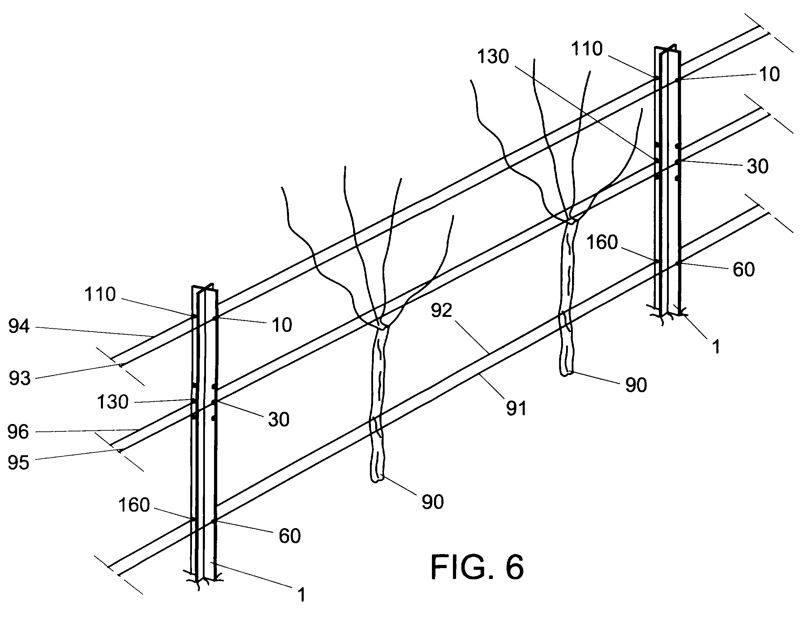

Fig. 6 shows an example for application of the vine pole 1 according to the invention. Two vines 90 are shown, which form part of a row of vines. In alignment with the vines 90 two vine poles 1 are erected; the lower 40 cm of the vine pole 1 are introduced into the soil 95.

Through the sharp point 9 of the vine pole 1 this pole can be easily driven into the soil. This has the advantage that during the introduction the frontal surface of the pole 1 is small because of the cross-shaped cross-section. In specific soil types it may be advisable to first dig a hole and then place the pole 1 in the hole.

Through the lower passage eyes 60 in one flange of the vine poles 1 a tension wire 91 is stretched, and through the passage eyes 160 in the opposite flange a second tension wire 92. The wires 91, 92 are stretched by stretching means, not shown. Through the wires 91, 92, as described above, being enclosed in respective holes 60, 160, the wires 91, 92 cannot leave the holes 60, 160 through movements, for instance, movements caused by wind. As a result, the wires 91, 92 are effectively supported and held in place by the vine poles 1. Besides, the stretched wires 91, 92 support the vine poles 1. The respective stems of the shrubs 90 are located between the wires 91 and 92, so that a lower part of the shrubs 90 can he supported by the wires 91, 92.

Through the upper passage eyes 10 in one flange of the vine poles 1 a tension wire 93 is stretched, and through the passage eyes 110 in the opposite flange a second tension wire 94. The tension wires 93, 94 are stretched by stretching means, not shown, and are parallel to the tension wires 91 and 92. Through the wires 91, 92, as described above, being enclosed in the respective holes 10, 110, the wires 93, 94 cannot leave the holes 10, 110 through movements, for instance, movements caused by wind. As a result, the wires 93, 94 are effectively supported and held in place by the vine poles 1. The tension wires 93, 94 can support an upper part of runners of the vines 90.

Through the middle fixing openings 30 in one flange of the vine poles 1 a guiding wire 95 is passed, and through the fixing openings 130 in the opposite flange a second guide wire 96 is passed. The wires 95, 96 are stretched by stretching means, not shown. Through the wires 95, 96, as described above, being enclosed in the respective fixing openings 30, 130, the wires 95, 96 are properly enclosed and do not easily leave the fixing openings 30, 130 through movements caused by the wind. Newly shot branches and runners of the vine 90 are located between the guiding wires 95, 96. The guiding wires 95, 96 support the new branches and runners. During the growth of the shrubs 90 the branches grow above the level of the fixing openings 30, 130. In order yet to be able to continue the support of the branches, the wires 95, 96 can be moved from the fixing openings 30, 130 to the higher fixing openings 20, 120. The wires 95, 96 are then lifted from the lower part of fixing openings 30, 130, respectively and removed from the pole 1. Subsequently, the wires 95, 96 are moved up and introduced into the respective fixing openings 20, 120. The guiding wires 95, 96 are now at a higher level, so that the upper part of the branches of the vines 90 can be effectively supported again.

Through the fact that according to the invention the vine poles 1 are made of plastic, it is ensured that during use no pollution of the soil occurs. Through the vine poles 1 having a cross-shaped cross-section, the poles are sufficiently strong and stiff to be able to resist without any problems the loads occurring during use. while the weight of the vine poles 1 and the amount of required base materials for the manufacture of the vine poles 1 is limited to a minimum. Through the gripping means in the form of the fixing openings 20-40, 120-140 and the passage eyes 10, 50, 60, 110, 150, 160 being integrated into the flanges of the pole, it is ensured that the costs of manufacture of the vine pole remain low and the vine poles are immediately ready for use, with no need for providing supplementary component parts. Through the gripping means falling completely within the contour of the flange, damage to the fixing means during transport and storage is impossible.

The invention is not limited to the example described, in which two opposite flanges are provided with gripping means. The invention also provides a vine pole in which more than two flanges, for instance all the flanges, are provided with gripping means. Besides, the invention provides a vine pole in which only one of the flanges is provided with gripping means.

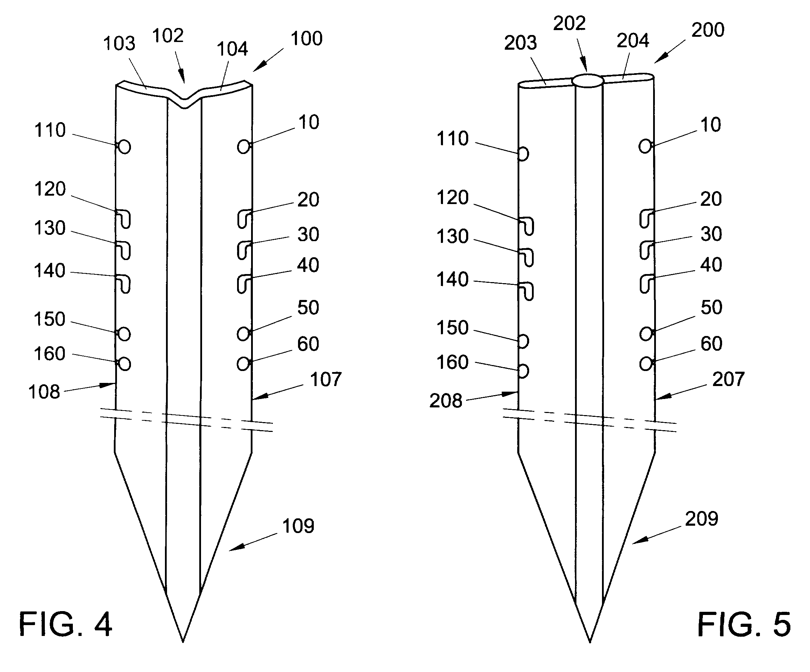

Fig. 4 shows a modification of a vine pole according to the invention. The pole 100 is formed from an arched elongated plastic plate which, in a central part, is provided with a stiffening rib 102. From this rib 102 two curved flanges 103, 104 extend. In the respective edges 107, 108 of the flanges 104, 103, gripping means in the form of passage eyes 10-60 and fixing openings 110-160 are provided in a manner identical to the first exemplary embodiment. At a lower end the vine pole 100 is provided with a sharp point 109 having an apex angle of 30°. Preferably, the pole 100 is made completely or partly of recycled plastic.

In operation, the vine poles 100 are used in the same manner as described above for the vine poles 1 of the first exemplary embodiment. Through the vine pole 200 having two flanges 103, 104, the costs of manufacture of the vine pole 100 are further reduced. Through the stiffening rib 102 and the curved flanges 103, 104 the vine pole 100 is sufficiently strong to be able to resist the forces occurring during use. Besides, the vine pole 100 can advantageously be stacked.

In a further modification, not shown, the curved flanges 103, 104 may extend from the central rib such that the cross-section of the vine pole is point-symmetric. Through this geometry the stability in the operative condition is improved.

Fig. 5 shows another modification of a vine pole according to the invention. The pole 200 is formed from an elongated rectangular plastic plate which, in a central part, is provided with a stiffening rib 202. From this rib 202 two flat flanges 203, 204 extend, the two flanges 203, 204 being located in the same plane. Preferably, the pole 100 is made completely or partly of recycled plastic.

In the respective edges 207, 208 of the flanges 204, 203 gripping means in the form of passage eyes 10-60 and fixing openings 110-160 are provided in a manner identical to the first exemplary embodiment. At a lower end the vine pole 200 is provided with a sharp point 209 having an apex angle of 30°.

In operation, the vine poles 200 are used in the same manner as described above for the vine poles 1 of the first exemplary embodiment. Through the vine pole 200 having two flanges 203, 204, the vine pole 200 can be manufactured in a very simple manner. Through the stiffening rib 202 the vine pole 100 is sufficiently strong to be able to resist the forces occurring during use.

In a further modification according to the invention the vine pole 200 is of such design that the flanges 203, 204 lie at an angle to each other, for instance, an angle between 180° and 30°. Through this mainly V-shaped cross-section the stiffness of the vine pole 200 is further improved, as is the stability in the operative condition.

## Claims

1. A vine pole for supporting wires for guiding vines, provided with spaced gripping means (10-60, 110-160) for wires, characterized by an elongated plastic section with at least two flanges (3, 5, 103, 104, 203, 204) extending from a central part of the section, the gripping means (10-60, 110-160) being located in an edge portion of at least one of the flanges (3, 5, 103, 104, 203, 204).

2. A device according to claim 1, characterized in that the gripping means (10-60, 110-160) are formed integrally with the at least one flange (3, 5, 103, 104, 203, 204).

3. A device according to any one of the preceding claims, characterized in that the gripping means (10-60, 110-160) are located completely within the contour of the at least one flange (3, 5, 103, 104, 203, 204).

4. A device according to any one of the preceding claims, characterized in that a cross-section of the section perpendicular to the longitudinal direction of the section is mainly cross-shaped.

5. A device according to any one of the preceding claims, characterized in that an extreme end of the section is provided with a point (9, 109, 209) having an apex angle less than 30°.

6. A device according to any one of the preceding claims, characterized in that the gripping means (10-60, 110-160) comprise at least one passage eye (10, 50, 60, 110, 150, 160).

7. A device according to claim 6, characterized in that the at least one passage eye (10, 50, 60, 110, 150, 160) is formed by a through opening (11) provided in the at least one flange (3, 5, 103, 104, 203, 204), the opening (11) being in open communication with an edge (7) of the at least one flange (3, 5, 103, 104, 203, 204) via a slot (12) directed at an angle (β) to a transverse plane through the section.

8. A device according to any one of the preceding claims, characterized in that the gripping means (10-60, 110-160) comprise at least one fixing opening (20, 30, 40, 120, 130, 140).

9. A device according to claim 8, characterized in that the at least one fixing opening (20, 30, 40, 120, 130, 140) is formed by a vertically elongated hole (21) provided in the at least one flange (3, 5, 103, 104, 203, 204), the opening (11) being in open communication with an edge (7) of the at least one flange (3, 5, 103, 104, 203, 204) via a slot (22) located in a transverse plane through the section.

10. A device according to any one of claims 6-9, characterized in that at least one flange (3, 5, 103, 104, 203, 204) is provided with at least one high passage eye (10, 110), a multiple of fixing openings (20, 30, 40, 120, 130, 140) located below the at least one high passage eye (10), and at least one low passage eye (50, 60, 150, 160) located below the multiple of fixing openings (20, 30, 40, 120, 130, 140).

11. A device according to any one of the preceding claims, characterized in that the plastic consists at least partly of recycled plastic.
